# EUROPÄISCHE PATENTANMELDUNG

(11) **EP 3 392 541 A1**
(43) Veröffentlichungstag der Anmeldung: **24.10.2018**
(21) Anmeldenummer: 17167054.0
(22) Anmeldetag: 19.04.2017
(51) Int. Cl.: F16K 51/02, F16K 37/00, F16K 3/10, F16K 3/18, G01L 1/22

(54) **VAKUUMVENTIL MIT KRAFTSENSOR**

(71) Anmelder: VAT Holding AG, 9469 Haag (CH)
(72) Erfinder: ESCHENMOSER, Adrian, 9472 Grabs (CH); HOFER, Andreas, 9443 Widnau (CH)
(74) Vertreter: Kaminski Harmann

(57) **Zusammenfassung**

Die Erfindung betrifft ein Vakuumventil mit einer Sensoranordnung mit mindestens einem ein verformungsempfindliches Element aufweisenden Kraftsensor (11a, 11b, 11c, 11d, 11e, 11f), wobei die Sensoranordnung derart ausgebildet ist, dass durch die Sensoranordnung ein Messsignal bezüglich einer durch eine erste (6a) und eine zweite (6b) Dichtfläche erzeugten Dichtungsverpressung der zwischen der ersten und der zweiten Dichtfläche liegenden Dichtung (10) erfasst wird.

## Beschreibung

Die Erfindung betrifft ein Vakuumventil mit einer Sensoranordnung mit mindestens einem ein verformungsempfindliches Element aufweisenden Kraftsensor.

Allgemein sind Vakuumventile zur Regelung eines Volumen- oder Massenstroms und/oder zum im Wesentlichen gasdichten Schliessen eines Fliesswegs, der durch eine in einem Ventilgehäuse ausgeformte Öffnung führt, in unterschiedlichen Ausführungsformen aus dem Stand der Technik bekannt und kommen insbesondere bei Vakuumkammersystemen im Bereich der IC-, Halbleiter- oder Substratfertigung, die in einer geschützten Atmosphäre möglichst ohne das Vorhandensein verunreinigender Partikel stattfinden muss, zum Einsatz. Derartige Vakuumkammersysteme umfassen insbesondere mindestens eine zur Aufnahme von zu bearbeitenden oder herzustellenden Halbleiterelementen oder Substraten vorgesehene, evakuierbare Vakuumkammer, die mindestens eine Vakuumkammeröffnung besitzt, durch welche die Halbleiterelemente oder anderen Substrate in die und aus der Vakuumkammer führbar sind, sowie mindestens eine Vakuumpumpe zum Evakuieren der Vakuumkammer. Beispielsweise durchlaufen in einer Fertigungsanlage für Halbleiter-Wafer oder Flüssigkristall-Substrate die hochsensiblen Halbleiter- oder Flüssigkristall-Elemente sequentiell mehrere Prozess-Vakuumkammern, in denen die innerhalb der Prozess-Vakuumkammern befindlichen Teile mittels jeweils einer Bearbeitungsvorrichtung bearbeitet werden. Sowohl während des Bearbeitungsprozesses innerhalb der Prozess-Vakuumkammern, als auch während des Transports von Kammer zu Kammer müssen sich die hochsensiblen Halbleiterelemente oder Substrate stets in geschützter Atmosphäre - insbesondere in luftleerer Umgebung - befinden.

Hierfür kommen zum einen Peripherieventile zum Öffnen und Schliessen einer Gaszu- oder -abfuhr und zum anderen Transferventile zum Öffnen und Schliessen der Transferöffnungen der Vakuumkammern für das Ein- und Ausführen der Teile zum Einsatz.

Die von Halbleiterteilen durchlaufenen Vakuumventile werden aufgrund des beschriebenen Anwendungsgebiets und der damit verbundenen Dimensionierung als Vakuum-Transferventile, aufgrund ihres mehrheitlich rechteckigen Öffnungsquerschnitts auch als Rechteckventil und aufgrund ihrer üblichen Funktionsweise auch als Schieberventil, Rechteckschieber oder Transferschieberventil bezeichnet.

Peripherieventile werden insbesondere zur Steuerung oder Regelung des Gasflusses zwischen einer Vakuumkammer und einer Vakuumpumpe oder einer weiteren Vakuumkammer eingesetzt. Peripherieventile befinden sich beispielsweise innerhalb eines Rohrsystems zwischen einer Prozess-Vakuumkammer oder einer Transferkammer und einer Vakuumpumpe, der Atmosphäre oder einer weiteren Prozess-Vakuumkammer. Der Öffnungsquerschnitt derartiger Ventile, auch Pumpenventile genannt, ist in der Regel kleiner als bei einem Vakuum-Transferventil. Da Peripherieventile abhängig vom Einsatzgebiet nicht nur zum vollständigen Öffnen und Schliessen einer Öffnung, sondern auch zum Steuern oder Regeln eines Durchflusses durch kontinuierliches Verstellen des Öffnungsquerschnitts zwischen eine vollständigen Offenstellung und einer gasdichten Geschlossenstellung eingesetzt werden, werden sie auch als Regelventile bezeichnet. Ein mögliches Peripherieventil zur Steuerung oder Regelung des Gasflusses ist das Pendelventil.

Bei einem typischen Pendelventil, wie beispielsweise aus der US 6,089,537 (Olmsted) bekannt, wird in einem ersten Schritt ein in der Regel runder Ventilteller über eine in der Regel ebenfalls runde Öffnung von einer die Öffnung freigebenden Stellung in eine die Öffnung überdeckende Zwischenstellung rotatorisch geschwenkt. Im Falle eines Schieberventils, wie beispielsweise in der US 6,416,037 (Geiser) oder der US 6,056,266 (Blecha) beschrieben, ist der Ventilteller, wie auch die Öffnung, meist rechteckig ausgebildet und wird in diesem ersten Schritt linear von einer die Öffnung freigebenden Stellung in eine die Öffnung überdeckende Zwischenstellung geschoben. In dieser Zwischenstellung befindet sich der Ventilteller des Pendel- oder Schieberventils in einer beabstandeten Gegenüberlage zu dem die Öffnung umgebenden Ventilsitz. In einem zweiten Schritt wird der Abstand zwischen dem Ventilteller und dem Ventilsitz verkleinert, so dass der Ventilteller und der Ventilsitz gleichmässig aufeinander gedrückt werden und die Öffnung im Wesentlichen gasdicht verschlossen wird. Diese zweite Bewegung erfolgt vorzugsweise im Wesentlichen in eine senkrechte Richtung zum Ventilsitz. Die Abdichtung kann z.B. entweder über einen auf der Verschlussseite des Ventiltellers angeordneten Dichtungsring, der auf den die Öffnung umlaufenden Ventilsitz gepresst wird, erfolgen, oder über einen Dichtungsring auf dem Ventilsitz, gegen den die Verschlussseite des Ventiltellers gedrückt wird. Durch den in zwei Schritten erfolgenden Schliessvorgang wird der Abdichtring zwischen dem Ventilteller und dem Ventilsitz kaum Scherkräften, die den Abdichtring zerstören würden, unterworfen, da die Bewegung des Ventiltellers im zweiten Schritt im Wesentlichen geradlinig senkrecht auf den Ventilsitz stattfindet.

Unterschiedliche Dichtvorrichtungen sind aus dem Stand der Technik bekannt, beispielsweise aus der US 6,629,682 B2 (Duelli). Ein geeignetes Material für Dichtungsringe und Dichtungen bei Vakuumventilen ist beispielsweise Fluorkautschuk, auch FKM genannt, insbesondere das unter dem Handelsnamen "Viton" bekannte Fluorelastomer, sowie Perfluorkautschuk, kurz FFKM.

Aus dem Stand der Technik sind unterschiedliche Antriebssysteme zur Erzielung diese Kombination einer beim Pendelventil rotatorischen und beim Schieberventil translatorischen Bewegung des Ventiltellers parallel über die Öffnung und einer im Wesentlichen translatorischen Bewegung senkrecht auf die Öffnung bekannt, beispielsweise aus der US 6,089,537 (Olmsted) für ein Pendelventil und aus der US 6,416,037 (Geiser) für ein Schieberventil.

Das Anpressen des Ventiltellers auf den Ventilsitz muss derart erfolgen, dass sowohl die geforderte Gasdichtigkeit innerhalb des gesamten Druckbereichs sichergestellt ist, als auch eine Beschädigung des Abdichtmediums, insbesondere des Abdichtrings in Form eines O-Rings, durch zu grosse Druckbeanspruchung vermieden wird. Um dies zu gewährleisten, sehen bekannte Ventile eine in Abhängigkeit von der zwischen den beiden Ventiltellerseiten herrschenden Druckdifferenz geregelte Anpressdruckregelung des Ventiltellers vor. Besonders bei grossen Druckschwankungen oder dem Wechsel von Unterdruck auf Überdruck, oder umgekehrt, ist eine gleichmässige Kraftverteilung entlang des gesamten Umfangs des Abdichtrings jedoch nicht immer gewährleistbar. Generell wird angestrebt, den Abdichtring von Abstützkräften, die sich aus dem an das Ventil anliegenden Druck ergeben, zu entkoppeln. In der US 6,629,682 (Duelli) wird hierzu z.B. ein Vakuumventil mit einem Abdichtmedium vorgeschlagen, das sich aus einem Abdichtring und einem danebenliegenden Abstützring zusammensetzt, so dass der Abdichtring von Abstützkräften im Wesentlichen befreit ist.

Um die geforderte Gasdichtigkeit, gegebenenfalls sowohl für Über- als auch Unterdruck, zu erreichen, sehen zusätzlich oder alternativ zum zweiten Bewegungsschritt manche bekannte Pendelventile oder Schieberventile einen senkrecht zum Ventilteller verschiebbaren, die Öffnung umgebenden Ventilring vor, der zum gasdichten Schliessen des Ventils auf den Ventilteller gedrückt wird. Derartige Ventile mit relativ zum Ventilteller aktiv verschiebbaren Ventilringen sind beispielsweise aus der DE 1 264 191 B1, der DE 34 47 008 C2, der US 3,145,969 (von Zweck) und der DE 77 31 993 U bekannt. In der US 5,577,707 (Brida) wird ein Pendelventil mit einem eine Öffnung aufweisenden Ventilgehäuse und einem parallel über die Öffnung schwenkbaren Ventilteller zum Steuern eines Durchflusses durch die Öffnung beschrieben. Ein Ventilring, der die Öffnung umschliesst, ist senkrecht in Richtung zum Ventilteller mittels mehrerer Federn und Druckluftzylinder aktiv bewegbar. Eine mögliche Weiterentwicklung dieses Pendelventils wird in der US 2005/0067603 A1 (Lucas et al.) vorgeschlagen.

Da oben genannte Ventile unter anderem bei der Herstellung hochsensibler Halbleiterelemente in einer Vakuumkammer zum Einsatz kommen, muss eine entsprechende Abdichtwirkung auch für solche Prozesskammern verlässlich gewährleistet sein. Hierfür ist insbesondere der Zustand eines Dichtmaterials oder einer bei Verpressung mit dem Dichtmaterial in Kontakt stehenden Dichtfläche von Bedeutung. Im Verlauf der Betriebsdauer eines Vakuumventils können typischerweise Abnutzungen des Dichtmaterials oder der Dichtflächen auftreten.

Um eine dabei eventuell entstehende Undichtigkeit zu vermeiden oder die Qualität der Dichtung auf einem konstant ausreichend hohen Niveau zu halten, wird ein Ventilverschluss typischerweise in bestimmten zeitlichen Abständen ausgetauscht bzw. erneuert. Ein solcher Wartungszyklus bemisst sich dabei meist an der Anzahl der zu erwartenden Öffnungs- und Schliesszyklen in einem bestimmten Zeitraum. Die Wartung erfolgt also meist vorsorglich um das Eintreten einer Undichtigkeit vorab weitestgehend ausschliessen zu können.

Ein solches Instandhaltungserfordernis beschränkt sich nicht allein auf das Dichtmaterial oder den Ventilteller, sondern erstreckt sich insbesondere ebenso auf den Ventilsitz, der einen zum Ventilteller korrespondierenden Teil des Vakuumventils bildet. Die Struktur einer Dichtfläche seitens des Ventilsitzes, z.B. einer in den Ventilsitz eingelassenen Nut, ist von einer mechanischen Beanspruchung ebenso betroffen. Daher kann auch eine aus einem Betrieb des Ventils resultiere strukturelle Veränderung der Nut eine Beeinträchtigung der Dichtung bewirken. Auch hierfür sind üblicherweise entsprechende Wartungsintervalle definiert.

Ein Nachteil dieser Ventilwartung liegt in deren vorsorglichem Charakter. Die von der Wartung betroffenen Teile werden zumeist vor Ablauf deren regulärer oder tatsächlicher Lebensdauer erneuert oder ersetzt. Jeder derartige Wartungsschritt bedeutet in der Regel eine gewisse Stillstandszeit für einen Produktionsprozess und einen erhöhnten technischen und finanziellen Aufwand. Dies bedeutet dann in Summe einen Stillstand der Produktion in Abständen, die kürzer sind als erforderlich, und häufiger als dies überhaupt notwendig wäre.

Der Erfindung liegt somit die Aufgabe zugrunde, ein verbessertes Vakuumventil bereitzustellen, welches einen optimierten Betrieb und damit eine Verbesserung, d.h. eine Verlängerung, der Lebensdauer von einzelnen Ventilteilen erlaubt.

Eine weitere Aufgabe der Erfindung besteht darin, ein verbessertes Vakuumventil bereitzustellen, welches eine optimierte Ventilwartung und damit eine Verbesserung, d.h. Verkürzung von allfälligen Prozessstillständen, erlaubt.

Eine weitere Aufgabe der Erfindung ist es ein solches Ventilsystem bereitzustellen, mit dem eine zuverlässigere gasdichte Abdichtung eines Prozessvolumens erreicht werden kann, insbesondere wobei die Qualität der Abdichtung prognostizierbar ist.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die grundlegende Idee der vorliegenden Erfindung ist es ein Vakuumventil mit einer Sensoranordnung mit mindestens einem Kraftsensor zu kombinieren und das Ventil und die Sensoranordnung dabei so auszugestalten, dass damit eine Überwachung und Minimierung eines Dichtungsverschleisses des Vakuumventils erfolgen kann. Mithilfe eines Drucksensors zur Erfassung einer durch die zueinander korrespondierenden Dichtflächen erzeugten Dichtungsverpressung der zwischen den Dichtflächen liegenden Dichtung kann die Verpressungskraft unabhängig vom Verschleiss der anderen Bauteile gemessen und gegebenenfalls geregelt werden, beispielsweise wobei durch unterschiedliche Dichtungsverpressungen für Differenzdruck und ohne Differenzdruck der Dichtungsverschleiss reduziert werden kann. Dadurch reduziert sich insbesondere der Wartungsaufwand und die Wartungsintervalle können entsprechend verlängert werden.

Ferner können mittels der Sensoranordnung sodann Messsignale erfasst werden und anhand dieser Signale eine Zustandsinformation des Vakuumventils abgeleitet werden, beispielsweise bezüglich eines Anpressdrucks der Dichtflächen auf die Dichtung, um beispielsweise eine strukturelle Ausgestaltung der Dichtfläche (Dichtmaterial) abzuleiten. Sodann kann also der Zustand des Vakuumventils überwacht und fortlaufend bewertet werden. Mittels der so erzeugbaren Daten kann ein Wartungs- bzw. Austauschzeitpunkt einzelner Komponenten, beispielsweise der Dichtfläche, bestimmt werden. Zum Beispiel kann somit ein Versagen der Dichtigkeit des Ventils weitgehend vorhergesagt und eine (zeitlich) punktuell abgestimmte Gegenmassnahme eingeleitet werden. Wartungsintervalle sind dadurch besser planbar und effizienter durchführbar, wobei gleichzeitig die Prozessintegrität gewahrt und gesichert bleibt.

Als relevante Zustandsinformation für den Dichtungsverschleiss des Vakuumventils kann z.B. ein Oberflächenverhalten (Verpressbarkeit) von Teilen der Dichtfläche oder eines elastomeren Dichtmaterials dienen.

Der Drucksensor kann beispielsweise auf einem DMS-Kraftsensor (DMS: Dehnmessstreifen) basieren, wobei der DMS-Sensor dazu beispielsweise auf eine Seite des Drucksensors aufgedampft wird. Durch den elektrischen Antrieb kann dann beispielsweise die Verpressung individuell eingestellt werden. In einem pneumatischen L-Motion Antrieb könnte mit dem Sensor auch überprüft werden, ob das Ventil geschlossen ist.

Die Erfindung betrifft ein Vakuumventil, z.B. ein Vakuumschieberventil, ein Pendelventil, oder ein Monoventil, zur Regelung eines Volumen- oder Massenstroms und/oder zum gasdichten Unterbrechen eines Fliesswegs, wobei das Vakuumventil einen Ventilsitz aufweist, der eine eine Öffnungsachse definierende Ventilöffnung, die beispielsweise einen ersten Gasbereich mit einem zweiten Gasbereich verbinden kann, und eine die Ventilöffnung umlaufende erste Dichtfläche aufweist. Das Vakuumventil umfasst ferner einen Ventilverschluss, insbesondere einen Ventilteller, zur Regelung des Volumen- oder Massenstroms und/oder zur Unterbrechung des Fliesswegs, mit einer zu der ersten Dichtfläche korrespondierenden zweiten Dichtfläche, deren veränderliche Lage durch eine jeweilige Position und Ausrichtung des Ventilverschlusses bestimmt ist.

Der Ventilsitz kann hierbei integraler Bestandteil des Vakuumventils sein und insbesondere einen Teil des Ventilgehäuses verkörpern. Alternativ kann der Ventilsitz durch die Öffnung einer Vakuumkammer gebildet sein und unter Zusammenwirkung mit dem relativ zu dem Ventilsitz beweglichen Ventilverschluss ein Vakuumventil im Sinne der vorliegenden Erfindung bilden.

Insbesondere weist eine der beiden Dichtflächen eine Dichtung aus Dichtmaterial auf. Das Dichtmaterial kann z.B. ein polymerbasiertes Material (z.B. Elastomer, insbesondere Fluorelastomer) sein, das auf die Dichtfläche aufvulkanisiert ist oder als O-Ring in einer Nut in dem Ventilverschluss oder dem Ventilsitz vorliegt. Als Dichtflächen werden im Rahmen der Erfindung also vorzugsweise diejenigen Flächen betrachtet, zwischen denen zum Verschliessen der Ventilöffnung (Schliessposition) eine Dichtung aus Dichtmaterial verpresst vorliegt.

Mit dem Ventilverschluss ist eine Antriebseinheit gekoppelt, die derart ausgebildet ist, dass der Ventilverschluss zur Bereitstellung von jeweiligen Ventilöffnungszuständen, die durch jeweilige Positionen des Ventilverschlusses definiert sind, definiert variierbar und einstellbar ist. Der Ventilverschluss ist von einer Offenposition, in welcher der Ventilverschluss und der Ventilsitz relativ zueinander kontaktlos vorliegen, in eine Schliessposition, in welcher über eine dazwischen liegende Dichtung ein axial dichtender Kontakt zwischen der ersten Dichtfläche und der zweiten Dichtfläche besteht und die Ventilöffnung dadurch gasdicht verschlossen ist, und zurück verstellbar.

Die Antriebseinheit ist beispielsweise als ein Elektromotor (Schrittmotor) oder als eine Kombination von mehreren Motoren oder als pneumatischer Antrieb ausgebildet. Insbesondere stellt der Antrieb eine Bewegung des Ventilverschlusses in zumindest zwei (im Wesentlichen orthogonale) Richtungen bereit.

Das Vakuumventil weist ferner eine Sensoranordnung mit mindestens einem ein verformungsempfindliches Element aufweisenden Kraftsensor auf, z.B. einen DMS-Kraftsensor, wobei die Sensoranordnung derart ausgebildet ist, dass durch die Sensoranordnung ein Messsignal bezüglich einer durch die erste und die zweite Dichtfläche erzeugten Dichtungsverpressung der zwischen der ersten und der zweiten Dichtfläche liegenden Dichtung erfasst wird.

In einer Ausführungsform weist das Vakuumventil eine Kontroll- und Steuereinheit auf zur Ansteuerung der Antriebseinheit mit vordefinierten Steuerwerten zur Verstellung des Ventilverschlusses zwischen der Offenposition und der Schliessposition, wobei die Antriebseinheit, der Ventilverschluss und die Sensoranordnung derart ausgebildet sind und zusammenwirken, dass die Steuerwerte basierend auf dem Messsignal eingestellt werden, insbesondere derart, dass das Messsignal kontinuierlich einem vordefinierten Sollwert entspricht.

Dabei können das Vakuumventil, die Sensoranordnung und die Kontroll- und Steuereinheit beispielsweise derart konfiguriert sein, dass die Sensoranordnung für eine Bereitstellung und Übertragung des Messsignals beispielsweise über eine herkömmliche drahtgebundene oder kabellose Verbindung mit der Kontroll- und Steuereinheit in einseitiger oder zweiseitiger Kommunikation steht.

Das Vakuumventil kann ferner beispielsweise eine derart ausgebildete Verarbeitungseinheit aufweisen, insbesondere bereitgestellt durch die Kontroll- und Steuereinheit oder die Sensoranordnung, dass ein erfasstes Messsignal mittels der Verarbeitungseinheit verarbeitbar ist und anhand des erfassten Messsignals eine Zustandsinformation erzeugbar ist. Die erfassten Messsignale können sodann für die Bereitstellung einer bewertbaren Zustandsinformation, beispielsweise für die Ventilregelung durch die Kontroll-und Steuereinheit oder als Benutzerinformation weiterverarbeitet und bereitgestellt werden.

Die Zustandsinformation kann beispielsweise eine Information bezüglich einer mechanischen und/oder strukturellen Integrität der ersten Dichtfläche und/oder der zweiten Dichtfläche und/oder der Dichtung bereitstellen, beispielsweise basierend auf einem Ist-Soll-Vergleich für das erfasste Messsignal, z.B. basierend auf einem erfassten und einem erwarteten Anpressdruck für eine Referenzeinstellung der Antriebseinheit.

Ferner kann basierend auf der Zustandsinformation ein Ausgabesignal bereitgestellt werden, das eine Relation des erfassten Messsignals zu bestimmten Toleranzwerten angibt. So kann insbesondere eine Bewertung bezüglich eines durch das Vakuumventil gesteuerten Prozesses erfolgen, beispielsweise eine Bewertung ob eine geforderte Dichtwirkung erreicht wird oder es können allfällige Verschmutzungen oder Beschädigungen der Dichtfläche erkannt werden. Beispielsweise kann dann einem Benutzer durch ein visuelles oder akustisches Signal angezeigt werden, ob ein Prozess innerhalb der geforderten Toleranzen abläuft oder ein unerwünschtes Unter- oder Überschreiten einer solchen Toleranz (z.B. Druckniveau) zu erwarten ist.

Gemäss einer Ausführungsform der Erfindung kann die Sensoranordnung beispielsweise derart ausgebildet sein, dass das Messsignal eine von zumindest einem Teil der Dichtung auf zumindest einen Teil der ersten Dichtungsfläche wirkende Kraft und/oder eine von zumindest einem Teil der Dichtung auf zumindest einen Teil der zweiten Dichtungsfläche wirkende Kraft erfasst.

Zum Beispiel kann ein Kraftsensor zur Messung der wirkenden Kräfte durch den Ventilverschluss bereitgestellt sein, z.B. wobei der Kraftsensor im Ventilverschluss angeordnet ist, insbesondere zur Erfassung einer Kraft von der zweiten Dichtfläche auf die übrigen Teile des Ventilverschlusses.

Ein Kraftsensor kann ferner auch durch den Ventilsitz bereitgestellt sein, insbesondere zur Erfassung einer Kraft von der ersten Dichtfläche auf die übrigen Teile des Ventilsitzes.

In einer Ausführungsform ist die Sensoranordnung beispielsweise derart ausgebildet, dass das verformungsempfindliche Element an einem zumindest einen Teil der ersten und/oder der zweiten Dichtfläche aufweisenden Teil des Ventilsitzes bzw. des Ventilverschlusses angeordnet ist.

Zum Beispiel kann die Sensoranordnung derart ausgebildet sein, dass zumindest ein Teil des verformungsempfindlichen Elements zumindest einen Teil der ersten Dichtfläche bildet, wobei beispielsweise ein druckempfindliches Element eines Kraftsensors dichtungsseitig auf zumindest einen Teil des die erste Dichtfläche aufweisenden Teils des Ventilsitzes aufgebracht wird.

In analoger Weise kann die Sensoranordnung beispielsweise derart ausgebildet sein, dass zumindest ein Teil eines weiteren verformungsempfindlichen Elements zumindest einen Teil der zweiten Dichtfläche bildet.

Ferner kann beispielsweise auch zumindest ein Teil des verformungsempfindlichen Elements ventilsitzseitig unter einem zumindest einen Teil der ersten Dichtfläche bildenden und auf den Ventilsitz aufgebrachten Dichtmaterial angeordnet sein, z.B. direkt auf den Teil des Ventilsitzes unter dem Dichtmaterial oder auf das Dichtmaterial aufgedampft sein. In analoger Weise kann beispielsweise zumindest ein Teil eines weiteren verformungsempfindlichen Elements ventiltellerseitig unter einem zumindest einen Teil der zweiten Dichtfläche bildenden und auf den Ventilteller aufgebrachten Dichtmaterial angeordnet sein.

In einer weiteren Ausführungsform ist der Ventilverschluss über ein erstes Kopplungsbauteil mit der Antriebseinheit gekoppelt und die Sensoranordnung ist derart ausgebildet, dass das Messsignal eine Kraft vom ersten Kopplungsbauteil auf den Ventilverschluss und/oder vom ersten Kopplungsbauteil auf die Antriebseinheit und/oder vom Ventilverschluss auf das erste Kopplungsbauteil und/oder von der Antriebseinheit auf das erste Kopplungsbauteil erfasst.

Beispielsweise können dazu mehrere Kraftsensoren der Sensoranordnung an unterschiedlichen Stellen angeordnet sein, zum Beispiel an Kontaktpunkten des Ventilverschlusses mit dem ersten Kopplungsbauteil oder der Antriebseinheit mit dem ersten Kopplungsbauteil. Die einzelnen Kraftsensoren können dann beispielsweise derart verwendet werden, dass jeweils direkt die auf die Kraftsensoren wirkenden Kräfte erfasst werden.

Über einen einzelnen Kraftsensor kann aber beispielsweise über die Kenntnis von strukturellen Merkmalen von Teilen des Vakuumventils auch ein Anpressdruck bezüglich einer Stelle im Vakuumventil abgeleitet werden, welche nicht unmittelbar durch die Anordnung des einzelnen Kraftsensors im Vakuumventil erfasst wird. Eine Anordnung eines einzelnen Kraftsensors kann also unter gegebenen Umständen ausreichend sein für eine Ventilregelung und/oder für eine Erfassung des Zustands des Vakuumventils.

Vorteilhaft ist hierbei insbesondere auch, dass die Sensoranordnung beispielsweise derart ausgebildet sein kann, dass z.B. ein Kraftsensor selbst nicht in den Vakuumbereich gebracht werden muss und damit ein vergleichsweise geringer konstruktiver Aufwand gewährleistet werden kann.

Eine Ausführungsform bezieht sich deshalb auf ein Vakuumventil, mit einem von einer äusseren Umgebung abgetrennten Vakuumbereich, wobei zum Messsignal beitragende Kraftsensoren der Sensoranordnung ausserhalb des Vakuumbereichs angeordnet sind.

In einer weiteren Ausführungsform der Erfindung umfasst das Vakuumventil ein erstes Ventilgehäuse, wobei die Antriebseinheit mit dem ersten Ventilgehäuse verbunden ist, der Ventilverschluss über ein zweites Kopplungsbauteil mit der Antriebseinheit gekoppelt ist, und das zweite Kopplungsbauteil an einem mit dem ersten Ventilgehäuse verbundenen ersten Abstützelement für eine kontrollierte Führung des zweiten Kopplungsbauteils anliegt. Die Sensoranordnung kann nun derart ausgebildet sein, dass das Messsignal eine Kraft vom zweiten Kopplungsbauteil auf das erste Abstützelement und/oder vom ersten Abstützelement auf das zweite Kopplungsbauteil erfasst.

Eine weitere Ausführungsform der Erfindung betrifft eine Ausführung wobei der Ventilverschluss über ein drittes Kopplungsbauteil mit der Antriebseinheit gekoppelt ist, wobei das dritte Kopplungsbauteil mindestens einen Verstellarm aufweist und der Verstellarm mit dem Ventilverschluss und der Antriebseinheit mechanisch gekoppelt ist, wobei durch Verstellen des Verstellarms mittels der Antriebseinheit der Ventilverschluss zwischen der Offenposition und der Schliessposition im Wesentlichen parallel zum Ventilsitz verstellbar ist. Beispielsweise basieren Transferventile oft auf einer solchen Kopplungsanordnung.

Die erfindungsgemässe Sensoranordnung kann nun also beispielsweise derart ausgebildet sein, dass das Messsignal eine Kraft vom Verstellarm auf den Ventilverschluss und/oder vom Ventilverschluss auf den Verstellarm, und/oder vom Verstellarm auf die Antriebseinheit und/oder von der Antriebseinheit auf den Verstellarm erfasst.

Zur kontrollierten Führung des Verstellarms kann das Vakuumventil beispielsweise eine Führungskomponente für eine zumindest einseitige Führung, respektive Abstützung des Verstellarms am Ventilgehäuse aufweisen. Insbesondere kann nun also die Abstützung ferner einen Kraftsensor bereitstellen oder durch einen Kraftsensor ersetzt werden.

In einer weiteren Ausführungsform ist die Antriebseinheit mit einem zweiten Ventilgehäuse des Vakuumventils verbunden, der Ventilverschluss ist über das einen Verstellarm aufweisende dritte Kopplungsbauteil mit der Antriebseinheit gekoppelt, und der Verstellarm liegt an einem mit dem zweiten Ventilgehäuse verbundenen zweiten Abstützelement für eine kontrollierte Führung des Verstellarms an, wobei die Sensoranordnung derart ausgebildet ist, dass das Messsignal eine Kraft vom Verstellarm auf das zweite Abstützelement und/oder vom zweiten Abstützelement auf den Verstellarm erfasst.

Beispielsweise kann dazu mindestens eines von folgendem den das verformungsempfindliche Element aufweisenden Kraftsensor der Sensoranordnung aufweisen: der Ventilverschluss, das zweite Abstützelement, die Antriebseinheit, und das dritte Kopplungsbauteil, insbesondere der Verstellarm.

Ein einzelner Kraftsensor kann dabei beispielsweise unmittelbar an oder beabstandet zu Kontaktpunkten des Ventilverschlusses mit dem Verstellarm, des Verstellarms mit dem Abstützelement, und/oder der Antriebseinheit mit dem Verstellarm angeordnet sein. Insbesondere können einzelne Kraftsensoren beispielsweise derart verwendet werden, dass jeweils direkt die auf den einzelnen Kraftsensor wirkenden Kräfte erfasst werden, oder dass ein Anpressdruck bezüglich einer Stelle im Vakuumventil abgeleitet wird, welche nicht unmittelbar durch die Anordnung des einzelnen Kraftsensors im Vakuumventil erfasst wird.

Im Speziellen ist die Sensoranordnung jeweils derart ausgebildet, dass die Verpressungskraft unabhängig vom Verschleiss von einzelnen Ventilbauteilen, insbesondere der Antriebskomponenten, gemessen werden kann.

Das erfindungsgemässe Vakuumventil wird nachfolgend anhand von in den Zeichnungen schematisch dargestellten Ausführungsbeispielen rein beispielhaft näher beschrieben. Gleiche Elemente sind in den Figuren mit gleichen Bezugszeichen gekennzeichnet. Die beschriebenen Ausführungsformen sind in der Regel nicht massstabsgetreu dargestellt und sie sind auch nicht als Einschränkung zu verstehen.

Im Einzelnen zeigen
- Fig. 1a,b: eine mögliche Ausführungsform eines erfindungsgemässen Vakuumventils als Pendelventil;
- Fig. 2a-c: eine mögliche Ausführungsform eines erfindungsgemässen Vakuumventils als Transferventil;
- Fig. 3a,b: schematische Darstellung einer erfindungsgemässen Sensoranordnung in einem Transferventil mit zwei Kraftsensoren;
- Fig. 4a,b: schematische Darstellung einer weiteren erfindungsgemässen Sensoranordnung in einem Transferventil mit einem Kraftsensor;
- Fig. 5a,b: schematische Darstellung einer weiteren erfindungsgemässen Sensoranordnung in einem Monoventil.

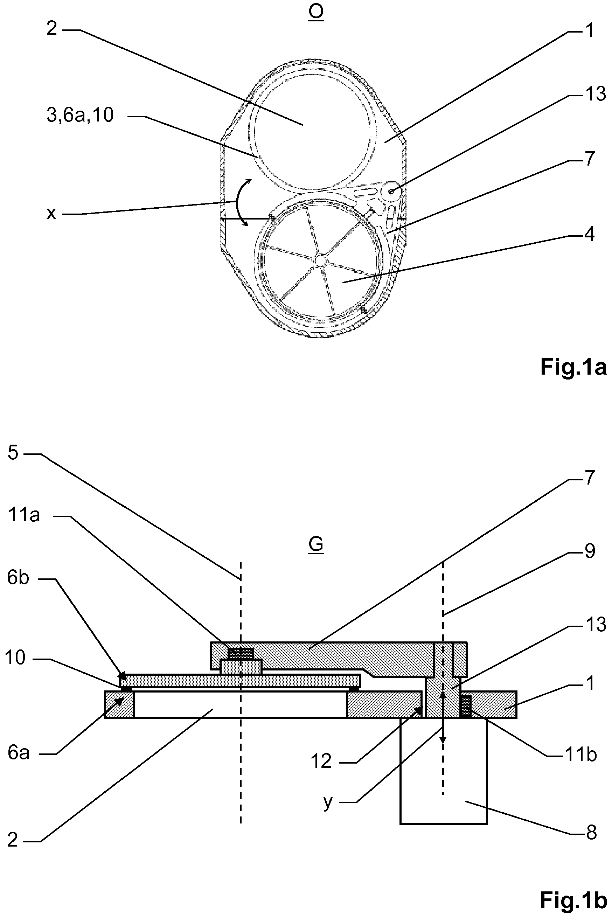

**Figur 1a** und **Figur 1b** zeigen schematisch eine mögliche Ausführungsform des erfindungsgemässen Ventils in Form eines Pendelventils. Das Ventil zum im Wesentlichen gasdichten Unterbrechen eines Fliesswegs besitzt ein Ventilgehäuse 1, welches eine Öffnung 2 aufweist. Die Öffnung 2 hat hier beispielsweise einen kreisrunden Querschnitt. Die Öffnung 2 wird von einem Ventilsitz 3 umschlossen. Dieser Ventilsitz 3 wird von einer axial in Richtung eines Ventiltellers 4 weisenden und quer zur Öffnungsachse 5 verlaufenden, die Form eines Kreisrings aufweisenden Dichtfläche 6a, welche im Ventilgehäuse 1 ausgeformt ist, gebildet. Der Ventilteller 4 ist schwenkbar und im Wesentlichen parallel zur Öffnungsachse 5 verstellbar. In einer Geschlossenstellung G (Fig.1b) des Ventiltellers 4 (Ventilverschluss), ist die Öffnung 2 mittels des Ventiltellers 4 gasdicht verschlossen. Eine Offenstellung O des Ventiltellers 4 ist in Fig. 1a veranschaulicht.

Der Ventilteller 4 ist über einen seitlich an dem Teller angeordneten, sich senkrecht zur Öffnungsachse 5 erstreckenden Arm 7 mit einem Antrieb 8 (Motor) verbunden. Dieser Arm 7 befindet sich in der Geschlossenstellung G des Ventiltellers 4 ausserhalb des entlang der Öffnungsachse 5 geometrisch projizierten Öffnungsquerschnitts der Öffnung 2.

Der Antrieb 8 ist durch Einsatz eines entsprechenden Getriebes derart ausgebildet, dass der Ventilteller 4 - wie bei einem Pendelventil üblich - mittels einer Querbewegung x des Antriebs 8 quer zur Öffnungsachse 5 und im Wesentlichen parallel über den Querschnitt der Öffnung 2 und senkrecht zur Öffnungsachse 5 in Form einer Schwenkbewegung um eine Schwenkachse 9 zwischen einer Offenstellung O und einer Zwischenstellung schwenkbar und mittels einer parallel zur Öffnungsachse 5 erfolgenden Längsbewegung y des Antriebs 8 linear verschiebbar ist. In der Offenstellung O, ist der Ventilteller 4 in einem seitlich neben der Öffnung 2 angeordneten Verweilabschnitt positioniert, so dass die Öffnung 2 und der Fliessweg freigegeben sind. In der Zwischenstellung ist der Ventilteller 4 über der Öffnung 2 beabstandet positioniert und überdeckt den Öffnungsquerschnitt der Öffnung 2. In der Geschlossenstellung ist die Öffnung 2 gasdicht geschlossen und der Fliessweg unterbrochen, indem ein gasdichter Kontakt zwischen dem Ventilverschluss 4 (Ventilteller) und der Dichtfläche 6a des Ventilsitz besteht.

Um ein automatisiertes und geregeltes Öffnen und Schliessen des Ventils zu ermöglichen, sieht das Ventil beispielsweise eine elektronische Regel- und Steuerungseinheit vor, die derart ausgebildet ist und mit dem Antrieb 8 in derartiger Verbindung steht, dass der Ventilteller 4 zum gasdichten Abschliessen eines Prozessvolumens oder zum Regeln eines Innendrucks dieses Volumens entsprechend verstellbar ist.

Im vorliegenden Ausführungsbeispiel ist der Antrieb 8 als ein Elektromotor ausgebildet, wobei das Getriebe derart umschaltbar ist, dass ein Antreiben des Antriebs 8 entweder die Querbewegung x oder die Längsbewegung y bewirkt. Der Antrieb 8 und das Getriebe werden von der Regelung elektronisch angesteuert. Derartige Getriebe, insbesondere mit Kulissenschaltungen, sind aus dem Stand der Technik bekannt. Weiters ist es möglich, mehrere Antriebe zum Bewirken der Querbewegung x und der Längsbewegung y einzusetzen, wobei die Steuerung die Ansteuerung der Antriebe übernimmt.

Das präzise Regeln bzw. Einstellen des Durchflusses mit dem beschriebene Pendelventil ist nicht nur durch das schwenkende Verstellen des Ventiltellers 4 zwischen der Offenstellung O und der Zwischenstellung mittels der Querbewegung x, sondern vor allem durch lineares Verstellen des Ventiltellers 4 entlang der Öffnungsachse 5 zwischen der Zwischenstellung und der Geschlossenstellung mittels der Längsbewegung y möglich. Das beschriebene Pendelventil kann für präzise Regelaufgaben eingesetzt werden.

Sowohl der Ventilteller 4 als auch der Ventilsitz 3 besitzen jeweils eine Dichtfläche 6a,6b - eine erste und eine zweite Dichtfläche. Die erste Dichtfläche 6a weist zudem eine Dichtung 10 auf. Diese Dichtung 10 kann beispielsweise als Polymer mittels Vulkanisation auf den Ventilsitz 3 aufvulkanisiert sein. Alternativ kann die Dichtung 10 z.B. als O-Ring in einer Nut des Ventilsitzes 3 ausgeführt sein. Auch kann ein Dichtmaterial auf den Ventilsitz 3 aufgeklebt sein und dadurch die Dichtung 10 verkörpern. In einer alternativen Ausführungsform kann die Dichtung 10 seitens des Ventiltellers 4, insbesondere auf der zweiten Dichtfläche 6b, angeordnet sein. Auch Kombinationen dieser Ausführungen sind denkbar.

Der Ventilteller 4 wird beispielsweise anhand von Regelgrössen und eines ausgegebenen Steuersignals variabel eingestellt. Als Inputsignal wird zum Beispiel eine Information über einen aktuellen Druckzustand in einem mit dem Ventil verbundenen Prozessvolumen erhalten. Zudem kann dem Regler eine weitere Inputgrösse, z.B. ein Massenzustrom in das Volumen, bereitgestellt werden. Anhand dieser Grössen und anhand eines vorgegebenen Solldrucks, der für das Volumen eingestellt bzw. erreicht werden soll, erfolgt dann eine geregelte Einstellung des Ventils über die Zeit eines Regelzyklus, so dass ein Massenabfluss aus dem Volumen mittels des Ventils über die Zeit geregelt werden kann. Hierzu ist hinter dem Ventil eine Vakuumpumpe vorgesehen, d.h. das Ventil ist zwischen der Prozesskammer und der Pumpe angeordnet. Somit kann ein gewünschter Druckverlauf eingeregelt werden.

Durch die Einstellung des Ventilverschlusses 4 wird ein jeweiliger Öffnungsquerschnitt für die Ventilöffnung 2 eingestellt und damit die mögliche Gasmenge eingestellt, die pro Zeiteinheit aus dem Prozessvolumen evakuiert werden kann. Der Ventilverschluss 4 kann zu diesem Zweck eine von einer kreisrunden Form abweichende Form aufweisen, insbesondere um einen möglichst laminaren Medienfluss zu erreichen.

Zur Einstellung des Öffnungsquerschnitts ist der Ventilteller 4 durch die Regel- und Steuerungseinheit mittels der Querbewegung x des Antriebs 8 von der Offenstellung O in die Zwischenstellung und mittels der Längsbewegung y des Antriebs 8 von der Zwischenstellung in die Geschlossenstellung verstellbar. Zum vollständigen Öffnen des Fliesswegs ist der Ventilteller 4 durch die Steuerung mittels der Längsbewegung y des Antriebs 8 von der Geschlossenstellung in der Zwischenstellung und von dort aus mittels der Querbewegung x des Antriebs 8 von der Zwischenstellung in die Offenstellung O verstellbar.

Das Anpressen des Ventiltellers 4 auf den Ventilsitz 5 muss derart erfolgen, dass sowohl die geforderte Gasdichtigkeit innerhalb des gesamten Druckbereichs sichergestellt ist, als auch eine Beschädigung der Dichtung 10 durch zu grosse Druckbeanspruchung vermieden wird. Um dies zu gewährleisten, sehen bekannte Ventile eine in Abhängigkeit von der zwischen den beiden Ventiltellerseiten herrschenden Druckdifferenz geregelte Anpressdruckregelung des Ventiltellers 4 vor.

Besonders bei grossen Druckschwankungen oder dem Wechsel von Unterdruck auf Überdruck, oder umgekehrt, ist eine gleichmässige Kraftverteilung während eines Regelprozess, d.h. einer Variation des Öffnungsquerschnitts, jedoch nicht immer gewährleistbar. Je nach Ventilbeanspruchung werden also beispielsweise die Dichtung 10 (das Dichtmaterial), der Ventilteller 4 und die Dichtflächen 6a,6b unterschiedlich beansprucht, wodurch sich beispielsweise je nach Ventilbeanspruchung variable effektive Wartungsintervalle ergeben.

Im Stand der Technik wird ein Ventilverschluss typischerweise vorsorglich in festen zeitlichen Abständen ausgetauscht bzw. erneuert, um eine eventuell entstehende Undichtigkeit zu vermeiden oder die Qualität der Dichtung auf einem konstant ausreichend hohen Niveau zu halten. Dies hat unter anderem den Nachteil, dass Ventilteile zumeist vor Ablauf deren regulärer oder tatsächlicher Lebensdauer erneuert oder ersetzt werden.

Gemäss der vorliegenden Erfindung weist das Vakuumventil eine Sensoranordnung mit mindestens einem Kraftsensor auf, im gezeigten Beispiel zwei Kraftsensoren 11a,11b, wodurch beispielsweise eine Überwachung und Minimierung eines Dichtungsverschleisses des Vakuumventils erfolgen kann.

Zum Beispiel kann mittels eines Drucksensors 11a,11b zur Erfassung einer durch die zueinander korrespondierenden Dichtflächen 6a,6b erzeugten Dichtungsverpressung der zwischen den Dichtflächen 6a,6b liegenden Dichtung 10 die Verpressungskraft unabhängig von Druckschwankungen der Prozesskammer oder dem Verschleiss der anderen Bauteile gemessen werden. Die Verpressungskraft kann also über eine Prozessdauer hinweg, z.B. in Echtzeit, geregelt werden.

Dadurch kann der Dichtungsverschleiss reduziert und die Wartungsintervalle entsprechend verlängert werden.

Ferner können mittels der Sensoranordnung sodann Messsignale erfasst werden und anhand dieser Signale eine Zustandsinformation des Vakuumventils abgeleitet werden, beispielsweise bezüglich eines Anpressdrucks der Dichtflächen auf die Dichtung, um beispielsweise eine strukturelle Ausgestaltung der Dichtflächen 6a,6b und der Dichtung 10 abzuleiten. Der Zustand des Vakuumventils kann also überwacht und fortlaufend bewertet werden.

Im gezeigten Beispiel umfasst die Sensoranordnung einen im Querarm 7 angeordneten Kraftsensor 11a, wobei der Kraftsensor 11a für eine Kraftmessung beispielsweise einen Dehnmessstreifen aufweist, welcher auf eine Seite des Kraftsensor 11a aufgedampft ist. Der Kraftsensor 11a erfasst beispielsweise eine Normalkraft vom Ventilteller 4 auf den Querarm 7.

Alternativ könnte ein Kraftsensor zum Beispiel durch den Ventilteller 4 bereitgestellt werden, z.B. zur Erfassung einer Kraft von der Dichtfläche 6b des Ventiltellers auf die übrigen Teile des Ventiltellers 4 oder ein druckempfindliches Element des Kraftsensors kann beispielsweise dichtungsseitig auf eine der Dichtflächen 6a,6b aufgebracht werden zur direkten Erfassung einer von der Dichtung 10 auf die Dichtflächen 6a,6b wirkenden Kraft.

Im gezeigten Beispiel weist die Sensoranordnung ferner einen zweiten Kraftsensor 11b auf, bereitgestellt durch die Führung 12 der Antriebswelle 13 des Antriebs 8. Der zweite Kraftsensor 11b erfasst beispielsweise eine Kraft senkrecht zur Schwenkachse 9, wobei durch Kenntnis der strukturellen Merkmale von Teilen des Vakuumventils, insbesondere des Querarms 7 und der Kopplung des Querarms 7 mit der Antriebswelle 13 und des Ventiltellers 4, Informationen bezüglich eines Anpressdrucks des Ventiltellers 4 auf die Dichtung 10 abgeleitet werden können.

Alternativ zu einem Pendelventil wie dargestellt kann das erfindungsgemässe Vakuumventil mit einem anderen Vakuumventiltyp, z.B. einem Klappventil, Schieberventil oder einem sog. Butterfly-Regelventil, realisiert sein. Insbesondere ist das erfindungsgemässe Ventil zum Einsatz im Vakuumbereich ausgebildet. Ferner sind ebenso Pendelventile einsetzbar, deren Verschluss nur in einer Richtung verstellt werden kann.

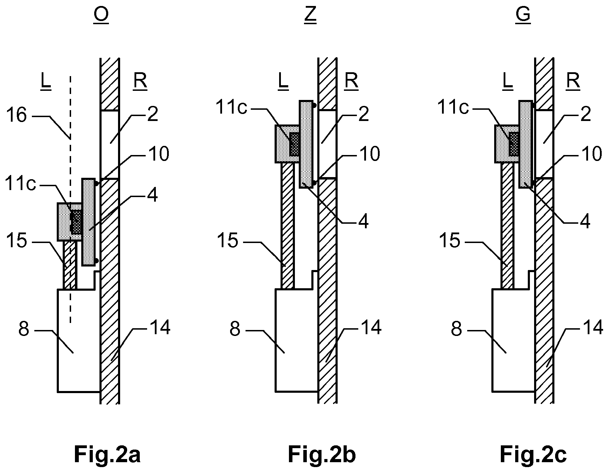

Figur 2a bis Figur 2c zeigen schematisch eine mögliche Ausführungsform des erfindungsgemässen Ventils in Form eines Transferventils, dargestellt in unterschiedlichen Verschlusspositionen.

Das gezeigte Transferventil ist eine Sonderform eines Schieberventils. Das Vakuumventil hat ein rechteckiges, plattenförmiges Verschlusselement 4 (z.B. Ventilteller), das eine Dichtfläche 6b zum gasdichten Verschliessen einer Öffnung 2 aufweist. Die Öffnung 2 hat einen dem Verschlusselement 4 entsprechenden Querschnitt und ist in einer Wand 14 ausgeformt. Die Öffnung 2 ist von einem Ventilsitz 3, der seinerseits ebenfalls eine mit der Dichtfläche 6b des Verschlusselements 4 korrespondierende Dichtfläche 6a bereitstellt, umgeben. Die Dichtfläche 6b des Verschlusselements 4 umläuft das Verschlusselement 4 und trägt ein Dichtmaterial 10 (Dichtung). In einer Geschlossenposition werden die Dichtflächen 6a,6b aufeinander gedrückt und das Dichtmaterial wird zwischen den beiden Dichtflächen 6a,6b verpresst.

Die Öffnung 2 verbindet einen ersten Gasbereich L, welcher sich links der Wand 14 befindet, mit einem zweiten Gasbereich R rechts der Wand 14. Die Wand 14 wird z.B. durch eine Kammerwand einer Vakuumkammer gebildet. Das Vakuumventil wird dann durch ein Zusammenwirken der Kammerwand 14 mit dem Verschlusselement 4 gebildet.

Das Verschlusselement 4 ist an einem Verstellarm 15 angeordnet, der hier beispielsweise stangenförmig ist, und sich entlang einer geometrischen Verstellachse 16 erstreckt. Der Verstellarm 15 ist mit einer Antriebseinheit 8 mechanisch gekoppelt, mittels welcher das Verschlussglied 4 in dem ersten Gasbereich L links der Wand 14 durch Verstellen des Verstellarms 15 mittels der Antriebseinheit 8 zwischen einer Offenposition O (Fig.2a) über eine Zwischenposition Z (Fig.2b) in eine Geschlossenposition G (Fig.2c) verstellbar ist.

In der Offenposition O befindet sich das Verschlusselement 4 ausserhalb des Projektionsbereichs der Öffnung 2 und gibt diese vollständig frei, wie in Figur 2a gezeigt.

Durch Verstellen des Verstellarms 15 in axiale Richtung parallel zu der Verstellachse 16 und parallel zu der Wand 14 kann das Verschlusselement 4 mittels der Antriebseinheit 8 von der Offenposition O in die Zwischenposition Z verstellt werden.

In dieser Zwischenposition Z überdeckt die Dichtfläche 6b des Verschlusselements die Öffnung 2 und befindet sich in beabstandeter Gegenüberlage zu der die Öffnung 2 umgebenden Dichtfläche 6a des Ventilsitzes 3, wie in Figur 2b gezeigt.

Durch Verstellen des Verstellarms 15 in Richtung quer zur Verstellachse 16, also z.B. senkrecht zur Wand 14 und zum Ventilsitz 3, kann das Verschlusselement 4 von der Zwischenposition Z in die Geschlossenposition G verstellt werden (Figur 2c).

In der Geschlossenposition G verschliesst das Verschlusselement 4 die Öffnung 2 gasdicht und trennt den ersten Gasbereich L von dem zweiten Gasbereich R gasdicht.

Das Öffnen und Schliessen des Vakuumventils erfolgt also mittels der Antriebseinheit 8 durch eine L-förmige Bewegung des Verschlusselements 4 und des Verstellarms 15. Daher wird das gezeigte Transferventil auch L-Typ-Ventil genannt.

Ein Transferventil wie gezeigt wird typischerweise zur Abdichtung eines Prozessvolumens (Vakuumkammer) und zur Beund Entladung des Volumens vorgesehen. Häufige Wechsel zwischen der Offenposition O und der Geschlossenposition G sind bei einem solchen Einsatz die Regel. Hierdurch können verstärkte Abnutzungserscheinungen der Dichtflächen 6a,6b und der Dichtung 10 eintreten.

Erfindungsgemäss ist eine Sensoranordnung mit zumindest einem Kraftsensor vorgesehen, zur Erfassung eines Messsignals bezüglich einer durch die Dichtflächen 6a,6b erzeugten Dichtungsverpressung der zwischen den Dichtflächen 6a,6b liegenden Dichtung 10. Das erfasste Messsignal kann insbesondere zur Überwachung und zur Regelung einer optimierten Anpressung verwendet werden.

Im gezeigten Beispiel ist ein Kraftsensor 11c im Ventilverschluss 4 angeordnet und erfasst beispielsweise eine durch die Anpressung der beiden Dichtflächen 6a,6b erzeugte Verformung des Ventilverschlusses 4.

Durch die erfindungsgemässe Sensoranordnung kann somit beispielsweise während eines Prozessablaufs die Dichtigkeit des Ventils überprüft, der Anpressdruck entsprechend geregelt und gegebenenfalls ein Versagen der Dichtigkeit vorhergesagt werden. Insbesondere kann beispielsweise mit einer elektrischen Antriebseinheit 8 die Verpressung individuell eingestellt werden. Mit einem pneumatischen L-Motion Antrieb könnte mit der Sensoranordnung zumindest überprüft werden, ob das Ventil geschlossen ist.

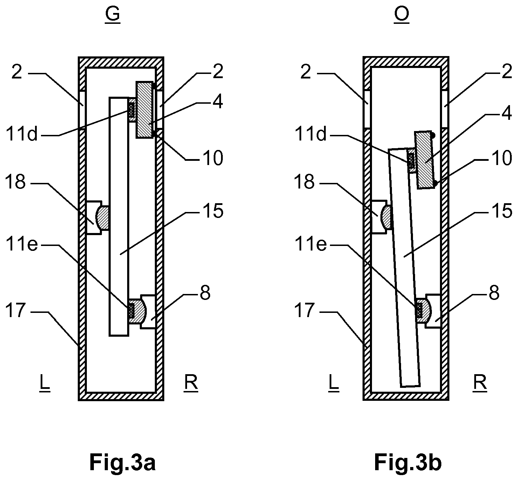

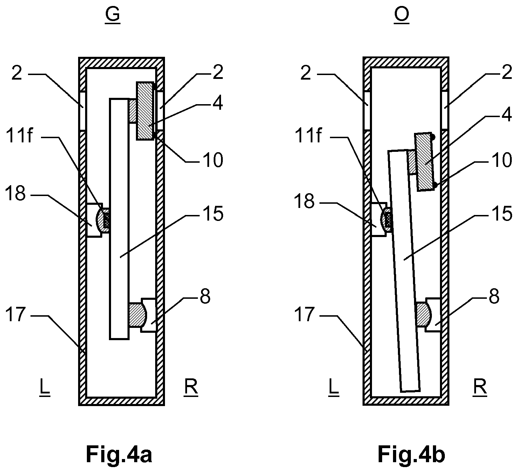

Die **Figuren 3a,3b****,** respektive die **Figuren 4a,4b** zeigen schematisch zwei weitere mögliche Sensoranordnungen in erfindungsgemässen Transferventilen, dargestellt in einer Geschlossenposition G (Fig.3a, Fig.4a) und einer Offenposition O (Fig.3b, Fig.4b).

Die in den vorherigen Figuren verwendeten Bezugszeichen gelten hier analog. In den gezeigten Figuren ist der Ventilsitz 3 ferner an einem Gehäuse 17 des Vakuumventils ausgebildet. Für einen Fachmann ist jedoch klar, dass die nachfolgende Beschreibung im Wesentlichen analog auf Ausführungsformen anwendbar ist, wobei der Ventilsitz 3 von einer Prozesskammer, d.h. einem Kammergehäuse, bereitgestellt wird.

Weiterhin versteht es sich von selbst, dass der hier rein schematisch als Kippmechanismus dargestellte Ventilmechanismus nicht einschränkend zu verstehen ist und ein Fachmann die erfinderische Sensoranordnung beispielsweise in analoger Weise auf einen beliebigen L-Motion Antrieb übertragen kann, z.B. einen L-Motion Antrieb mit zwei senkrecht aufeinander stehenden linearen Verstellrichtungen des Ventiltellers.

Zur kontrollierten Führung des Verstellarms 15 weist das Vakuumventil hier beispielsweise eine Führungskomponente 18 auf, wobei die Antriebseinheit 8 und die Führungskomponente 18 jeweils in einer festen Anordnung zueinander stehen, hier beispielsweise dadurch, dass sowohl die Antriebseinheit 8 wie auch die Führungskomponente 18 jeweils ortsfest mit dem Ventilgehäuse 17 verbunden sind. Der Verstellarm 15 ist ferner mit dem Ventilverschluss 4 und der Antriebseinheit 8 mechanisch gekoppelt, wobei durch Verstellen des Verstellarms 15, mittels der Antriebseinheit 8, der Ventilverschluss 4 zwischen der Offenposition O und der Schliessposition G im Wesentlichen parallel zum Ventilsitz 3 verstellbar ist, insbesondere in einer L-Motion Bewegung wie in den Figuren 2a bis 2d beschrieben.

Die Sensoranordnung kann nun derart ausgebildet sein, dass das Messsignal eine Kraft vom zweiten Kopplungsbauteil auf das erste Abstützelement und/oder vom ersten Abstützelement auf das zweite Kopplungsbauteil erfasst.

Die in den Figuren 3a und 3b gezeigte Sensoranordnung weist nun beispielsweise zwei Kraftsensoren 11d,11e auf, wobei ein Kraftsensor 11d bereitgestellt wird durch den Ventilverschluss 4 und der andere Kraftsensor 11e bereitgestellt wird durch die Antriebseinheit 8. Die Anordnung ermöglicht beispielsweise jeweils eine direkte Erfassung einer Kraft von der Antriebseinheit 8 auf den Verstellarm 15 und einer Kraft vom Ventilverschluss 4 auf den Verstellarm 15.

Dadurch kann beispielsweise eine Zustandsinformation des Vakuumventils, z.B. bezüglich einer mechanischen und/oder strukturellen Integrität der Dichtflächen 6a,6b oder der Dichtung 10, basierend auf einem Ist-Soll-Vergleich für das erfasste Messsignal hinsichtlich einer bekannten von der Antriebseinheit 8 auf den Verstellarm 15 wirkenden Kraft abgeleitet werden. Dazu kann das Messsignal als Funktion der auf den Verstellarm wirkenden Kräfte mit bekannten Toleranzwerten abgeglichen werden und zum Beispiel bei einem Zweifel hinsichtlich der bereitgestellten Dichtwirkung gegebenenfalls ein Warnsignal für einen Benutzer bereitgestellt werden.

Die in den Figuren 4a und 4b gezeigte Sensoranordnung umfasst einen einzelnen Kraftsensor 11f, bereitgestellt durch die Führungskomponente 18. Der Kraftsensor 11f erfasst also einerseits direkt eine Kraft, welche vom Verstellarm 15 auf die Führungskomponente 18 wirkt. Ferner kann jedoch durch die Kenntnis von strukturellen Merkmalen von Teilen des Vakuumventils auch ein Anpressdruck bezüglich einer Stelle im Vakuumventil abgeleitet werden, welche nicht unmittelbar durch die Anordnung des einzelnen Kraftsensors 11f im Vakuumventil erfasst wird. Eine Anordnung eines einzelnen Kraftsensors 11f kann also unter gegebenen Umständen ausreichend sein für eine Regelung des Vakuumventils oder für eine Erfassung des Zustands des Vakuumventils.

Insbesondere kann somit beispielsweise die Sensoranordnung derart ausgebildet sein, dass z.B. ein Kraftsensor selbst nicht in den Vakuumbereich gebracht werden muss und damit ein vergleichsweise geringer konstruktiver Aufwand gewährleistet werden kann.

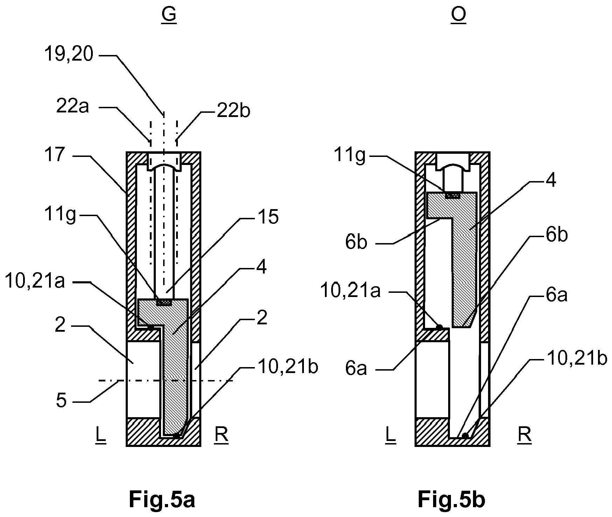

Die **Figuren 5a,5b** zeigen schematisch eine weitere mögliche Sensoranordnung, hier beispielsweise in einem sogenannten Monoventil, dargestellt in einer Geschlossenposition G (Fig.5a) und einer Offenposition O (Fig.5b).

Das Ventil zum gasdichten Schliessen eines Fliesswegs mittels einer Linearbewegung besitzt ein Ventilgehäuse 17 mit einer Öffnung 2 für den Fliessweg, wobei die Öffnung 2 eine geometrische Öffnungsachse 5 entlang des Fliesswegs aufweist. Das Verschlusselement 4 ist linear entlang einer zu der Öffnungsachse 5 quer verlaufenden, geometrischen Verstellachse 19 in einer Verschlusselementebene 20 von einer die Öffnung 2 freigebenden, geöffneten Position O in eine über die Öffnung 2 linear geschobene, geschlossene Position G in eine Schliessrichtung und umgekehrt zurück in eine Öffnungsrichtung verschiebbar.

Zum Beispiel umschliesst eine gekrümmte erste Dichtfläche 6a die Öffnung 2 des Ventilgehäuses 17 entlang eines ersten Abschnitts 21a in einer ersten Ebene 22a und entlang eines zweiten Abschnitts 21b in einer zweiten Ebene 22b. Die erste Ebene 22a und die zweite Ebene 22b sind zueinander beabstandet, verlaufen parallel zueinander und parallel zu der Verschlusselementebene 20. Somit weisen der erste Abschnitt 21a und der gegenüberliegende zweite Abschnitt 21b zueinander einen geometrischen Versatz quer zu der Verstellachse 19 und in Richtung der Öffnungsachse 5 auf. Zwischen den beiden gegenüberliegenden Abschnitten 21a und 21b in dem sich entlang der Verstellachse 19 erstreckenden Bereich ist die Öffnung 2 angeordnet.

Das Verschlusselement 4 weist eine zur ersten Dichtfläche 6a korrespondierende zweite Dichtfläche 6b auf, welche entlang zum ersten und zweiten Abschnitt 21a,21b korrespondierender Abschnitte verläuft.

Monoventile, d.h. mittels einer einzigen linearen Bewegung schliessbare Vakuumventile haben beispielsweise den Vorteil eines vergleichsweise einfachen Schliessmechanismus, z.B. verglichen mit den mittels zweier Bewegungen schliessbaren Transferventilen, die einen verhältnismässig komplex aufgebauten Antrieb erfordern. Da das Verschlusselement zudem einteilig ausgebildet sein kann, kann es hohen Beschleunigungskräften ausgesetzt werden, so dass dieses Ventil auch für Schnell- und Notverschlüsse verwendet werden kann. Das Schliessen und Dichten kann mittels einer einzigen linearen Bewegung erfolgen, so dass ein sehr schnelles Schliessen und Öffnen des Ventils möglich ist.

Insbesondere liegt ein Vorteil von Monoventilen beispielsweise darin, dass die Dichtung aufgrund ihres Verlaufs beim Schliessen keiner Querbelastung in Querrichtung zur Längserstreckung der Dichtung unterliegt. Andererseits ist die Dichtung aufgrund Ihrer Quererstreckung zur Öffnungsachse 5 kaum in der Lage, auf das Verschlusselement 4 entlang der Öffnungsachse 5 auftretende Kräfte, die insbesondere bei grossem Differenzdruck auf das Verschlusselement 4 wirken können, aufzunehmen, was einen robusten Aufbau des Verschlusselements 4, dessen Antriebs und dessen Lagerung erfordert.

Die in den Figuren 5a und 5b gezeigte Sensoranordnung umfasst einen einzelnen Kraftsensor 11g, angeordnet im Verschlusselement 4, zur Erfassung einer Kraft, welche vom Verstellarm 15 auf das Verschlusselement 4 wirkt. Wiederum kann also beispielsweise durch die Kenntnis von strukturellen Merkmalen von Teilen des Vakuumventils ein Messsignal bezüglich einer durch die erste 6a und die zweite 6b Dichtfläche erzeugten Dichtungsverpressung der zwischen der ersten und der zweiten Dichtfläche liegenden Dichtung 10 erfasst werden.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Vakuumventil, insbesondere Vakuumschieberventil, Pendelventil, oder Monoventil, zur Regelung eines Volumen- oder Massenstroms und/oder zum gasdichten Unterbrechen eines Fliesswegs, mit
• einem Ventilsitz (3), der eine eine Öffnungsachse (5) definierende Ventilöffnung (2) und eine die Ventilöffnung (2) umlaufende erste Dichtfläche (6a) aufweist,
• einen Ventilverschluss (4), insbesondere Ventilteller, zur Regelung des Volumen- oder Massenstroms und/oder zur Unterbrechung des Fliesswegs, mit einer zu der ersten Dichtfläche (6a) korrespondierenden zweiten Dichtfläche (6b), deren veränderliche Lage durch eine jeweilige Position und Ausrichtung des Ventilverschlusses (4) bestimmt ist,
• einer mit dem Ventilverschluss (4) gekoppelten Antriebseinheit (8), die derart ausgebildet ist, dass der Ventilverschluss (4) von
□ einer Offenposition (O), in welcher der Ventilverschluss (4) und der Ventilsitz (3) relativ zueinander kontaktlos vorliegen, in
□ eine Schliessposition (G), in welcher über eine dazwischen liegende Dichtung (10) ein axial dichtender Kontakt zwischen der ersten Dichtfläche (6a) und der zweiten Dichtfläche (6b) besteht und die Ventilöffnung (2) dadurch gasdicht verschlossen ist,
und zurück verstellbar ist,
**dadurch gekennzeichnet, dass**
das Vakuumventil ferner eine Sensoranordnung mit mindestens einem ein verformungsempfindliches Element aufweisenden Kraftsensor (11a,11b,11c,11d,11e,11f,11g) umfasst, insbesondere ein DMS-Kraftsensor, wobei die Sensoranordnung derart ausgebildet ist, dass durch die Sensoranordnung ein Messsignal bezüglich einer durch die erste (6a) und die zweite (6b) Dichtfläche erzeugten Dichtungsverpressung der zwischen der ersten und der zweiten Dichtfläche liegenden Dichtung (10) erfasst wird.

2. Vakuumventil nach Anspruch 1,
**dadurch gekennzeichnet, dass**
• gesteuert durch eine Kontroll- und Steuereinheit des Vakuumventils die Antriebseinheit (8) mit vordefinierten Steuerwerten zur Verstellung des Ventilverschlusses (4) zwischen der Offenposition (O) und der Schliessposition (G) angesteuert wird, und
• die Antriebseinheit (8), der Ventilverschluss (4) und die Sensoranordnung derart ausgebildet sind und zusammenwirken, dass die Steuerwerte basierend auf dem Messsignal eingestellt werden, insbesondere derart, dass das Messsignal kontinuierlich einem vordefinierten Sollwert entspricht.

3. Vakuumventil nach Anspruch 1 oder 2,
**dadurch gekennzeichnet, dass**
die Sensoranordnung derart ausgebildet ist, dass das Messsignal
• eine von zumindest einem Teil der Dichtung (10) auf zumindest einen Teil der ersten Dichtfläche (6a) wirkende Kraft und/oder
• eine von zumindest einem Teil der Dichtung (10) auf zumindest einen Teil der zweiten Dichtfläche (6b) wirkende Kraft
erfasst.

4. Vakuumventil nach Anspruch 1 bis 3,
**dadurch gekennzeichnet, dass**
die Sensoranordnung derart ausgebildet ist, dass das verformungsempfindliche Element an einem zumindest einen Teil der ersten und/oder der zweiten Dichtfläche aufweisenden Teil des Ventilsitzes bzw. des Ventilverschlusses angeordnet ist.

5. Vakuumventil nach einem der Ansprüche 1 bis 4,
**dadurch gekennzeichnet, dass**
der Ventilverschluss (4) über ein erstes Kopplungsbauteil mit der Antriebseinheit (8) gekoppelt ist und die Sensoranordnung derart ausgebildet ist, dass das Messsignal eine Kraft
• vom ersten Kopplungsbauteil auf den Ventilverschluss und/oder
• vom ersten Kopplungsbauteil auf die Antriebseinheit und/oder
• vom Ventilverschluss auf das erste Kopplungsbauteil und/oder
• von der Antriebseinheit auf das erste Kopplungsbauteil
erfasst.

6. Vakuumventil nach einem der Ansprüche 1 bis 4,
**dadurch gekennzeichnet, dass**
• das Vakuumventil ein erstes Ventilgehäuse (17) umfasst, wobei die Antriebseinheit (8) mit dem ersten Ventilgehäuse (17) verbunden ist,
• der Ventilverschluss (4) über ein zweites Kopplungsbauteil mit der Antriebseinheit (8) gekoppelt ist, und
• das zweite Kopplungsbauteil an einem mit dem ersten Ventilgehäuse (17) verbundenen ersten Abstützelement (18) für eine kontrollierte Führung des zweiten Kopplungsbauteils anliegt,
wobei die Sensoranordnung derart ausgebildet ist, dass das Messsignal eine Kraft
• vom zweiten Kopplungsbauteil auf das erste Abstützelement und/oder
• vom ersten Abstützelement auf das zweite Kopplungsbauteil
erfasst.

7. Vakuumventil nach einem der Ansprüche 1 bis 4,
**dadurch gekennzeichnet, dass**
der Ventilverschluss (4) über ein drittes Kopplungsbauteil mit der Antriebseinheit (8) gekoppelt ist, wobei das dritte Kopplungsbauteil mindestens einen Verstellarm (15) aufweist und der Verstellarm (15) mit dem Ventilverschluss (4) und der Antriebseinheit (8) mechanisch gekoppelt ist, wobei durch Verstellen des Verstellarms (15) mittels der Antriebseinheit (8) der Ventilverschluss (4) zwischen der Offenposition (O) und der Schliessposition (G) im Wesentlichen parallel zum Ventilsitz (3) verstellbar ist.

8. Vakuumventil nach Anspruch 7,
**dadurch gekennzeichnet, dass**
die Sensoranordnung derart ausgebildet ist, dass das Messsignal eine Kraft
• vom Verstellarm (15) auf den Ventilverschluss (4) und/oder
• vom Ventilverschluss (4) auf den Verstellarm (15), und/oder
• vom Verstellarm (15) auf die Antriebseinheit (8) und/oder
• von der Antriebseinheit (8) auf den Verstellarm (15) erfasst.

9. Vakuumventil nach Anspruch 7 oder 8,
**dadurch gekennzeichnet, dass**
• das Vakuumventil ein zweites Ventilgehäuse (17) umfasst, wobei die Antriebseinheit (8) mit dem zweiten Ventilgehäuse (17) verbunden ist,
• der Ventilverschluss (4) über das dritte Kopplungsbauteil mit der Antriebseinheit (8) gekoppelt ist, und
• der Verstellarm (15) an einem mit dem zweiten Ventilgehäuse (17) verbundenen zweiten Abstützelement (18) für eine kontrollierte Führung des Verstellarms (15) anliegt,
wobei die Sensoranordnung derart ausgebildet ist, dass das Messsignal eine Kraft
• vom Verstellarm (15) auf das zweite Abstützelement (18) und/oder
• vom zweiten Abstützelement (18) auf den Verstellarm (15)
erfasst.

10. Vakuumventil nach einem der Ansprüche 7 bis 9,
**dadurch gekennzeichnet, dass**
mindestens eines von folgendem den das verformungsempfindliche Element aufweisenden Kraftsensor (11c,11d,11e,11f,11g) der Sensoranordnung aufweist
• der Ventilverschluss (4),
• das zweite Abstützelement (18),
• die Antriebseinheit (8), und
• das dritte Kopplungsbauteil, insbesondere der Verstellarm (15).

11. Vakuumventil nach einem der vorhergehenden Ansprüche,
**dadurch gekennzeichnet, dass**
das Vakuumventil einen von einer äusseren Umgebung abgetrennten Vakuumbereich definiert und zum Messsignal beitragende Kraftsensoren der Sensoranordnung ausserhalb des Vakuumbereichs angeordnet sind.

12. Vakuumventil nach einem der vorhergehenden Ansprüche,
**dadurch gekennzeichnet, dass**
das Vakuumventil eine derart ausgebildete Verarbeitungseinheit aufweist, dass ein erfasstes Messsignal mittels der Verarbeitungseinheit verarbeitbar ist und anhand des erfassten Messsignals eine Zustandsinformation erzeugt wird.

13. Vakuumventil nach Anspruch 12,
**dadurch gekennzeichnet, dass**
die Zustandsinformation bezüglich einer mechanischen und/oder strukturellen Integrität der ersten Dichtfläche (6a) und/oder der zweiten Dichtfläche (6b) und/oder der Dichtung (10) bereitgestellt wird, insbesondere wobei die Zustandsinformation mittels eines Ist-Soll-Vergleichs für das erfasste Messsignal erzeugt ist.

14. Vakuumventil nach Anspruch 12 oder 13,
**dadurch gekennzeichnet, dass**
basierend auf einem Abgleich der Zustandsinformation mit vordefinierten Toleranzwerten ein Ausgabesignal bereitgestellt wird bezüglich einer Bewertung eines durch das Vakuumventil gesteuerten Prozesses.

15. Vakuumventil nach einem der vorhergehenden Ansprüche,
**dadurch gekennzeichnet, dass**
der Ventilsitz (3)
• durch einen strukturell mit dem Vakuumventil verbunden Teil des Vakuumventils gebildet wird, insbesondere wobei der Ventilsitz an einem Gehäuse (17) des Vakuumventils ausgebildet ist, oder
• von einer Prozesskammer, insbesondere einem Kammergehäuse (14), bereitgestellt ist.
